# EUROPEAN PATENT APPLICATION

(11) **EP 0 718 671 A1**
(43) Date of publication of application: **26.06.1996**
(21) Application number: 95308851.5
(22) Date of filing: 06.12.1995
(51) Int. Cl.: G02F 1/37, G02F 1/05, G02B 6/13

(54) **Method for forming domain inversion regions and for fabricating wavelength conversion device**

(30) Priority: 09.12.1994 JP 331859/94
(71) Applicant: Hewlett-Packard Company, Palo Alto, California 94304 (US)
(72) Inventor: Watanabe, Satoshi, Yamato-shi, Kanagawa (JP); Yamada, Norihide, Tokyo (JP)
(74) Representative: Powell, Stephen David

(57) **Abstract**

A method for fabricating wavelength conversion devices forms stripe-form masks on the surface of a ferroelectric crystal substrate, e.g. an LiTaO₃ crystal substrate. In the portions (4) of the surface of the crystal substrate where masks are not formed, specified ions, e.g. Li⁺ ions are exchanged with other ions, e.g. H⁺ ions. Plane electrodes (5) are formed on both sides of the crystal substrate, and the crystal substrate is heated. During the heating of the crystal substrate a voltage is applied across the electrodes (5) so that the other ions (H⁺) receive a force in the direction of the undersurface of the crystal substrate, thereby promoting the diffusion of the other ions (H⁺) toward said undersurface.

## Description

The invention relates to a method for forming domain inversion layers and for fabricating wavelength conversion devices. More particularly, the invention relates to a technique for fabricating wavelength conversion devices that are suitable for use in the fields of optical data processing and optical measurement.

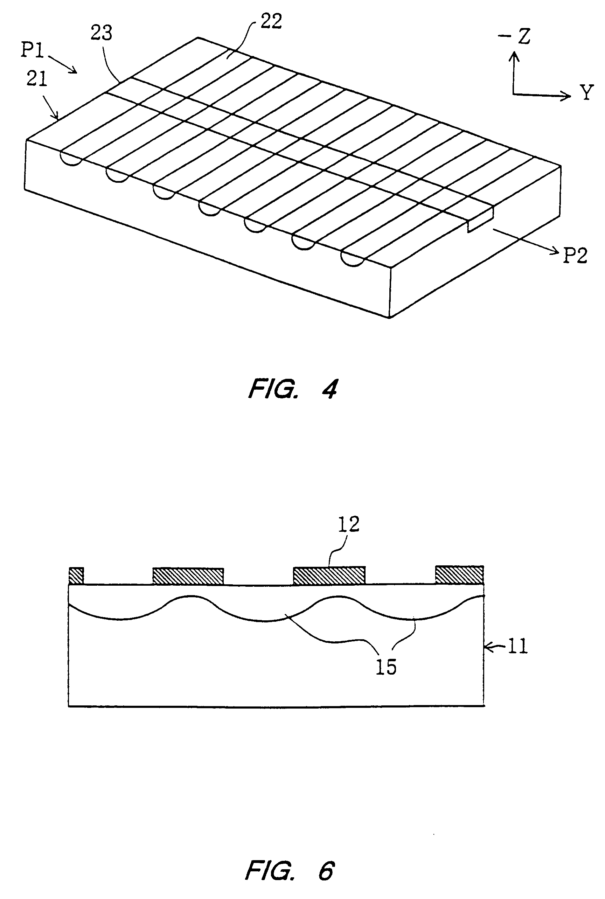

Techniques for forming domain inversion layers in ferroelectric crystal substrates are used in wavelength conversion devices of the type shown in Fig. 4. Ordinarily, as is shown in Fig. 4, such wavelength conversion devices are constructed by forming stripe-form domain inversion layers 22 having a period of lambda and a width of W in the surface of a ferroelectric crystal substrate 21 (whose surface is the -Z surface), and forming an optical waveguide 23 which is perpendicular to the domain inversion layers 22.

In such a wavelength conversion device, compensation for mismatch of the propagation constants of the fundamental wave and harmonic waves is accomplished by the periodic domain inversion layers. As a result, when a fundamental wave P1 irradiates to the incident surface of the optical waveguide 23, the corresponding harmonic wave P2 from the exiting surface can be generated with high efficiency.

In the case of such a wavelength conversion device, a domain inversion structure which is superior in terms of reproducibility can be formed by proton (H⁺) exchange using stripe-form masks and heat treatment. The efficiency of harmonic generation is greatly influenced by the structure of the periodic domain inversion layers.

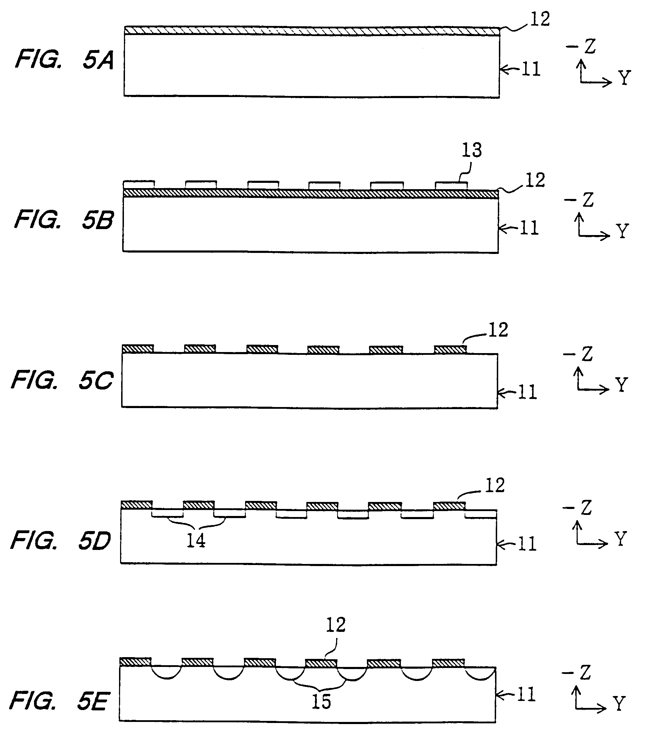

In a conventional wavelength conversion device fabricating process, a Ta mask layer 12 is first formed on the -Z surface of an LiTaO₃ substrate 11 as shown in Fig. 5 (A). Next, stripe-form photoresist layers 13 are formed as shown in Fig. 5 (B), and the Ta mask layer 12 is etched as shown in Fig. 5 (C). Afterward, proton exchange layers 14 are formed as shown in Fig. 5 (D), and H⁺ diffusion is caused by heating the substrate(11 to the vicinity of the Curie temperature (transition temperature) as shown in Fig. 5 (E). As a result, domain inversion layers 15 are formed in the LiTaO₃ substrate 11.

However, in this method, H⁺ is diffused in random directions during the heat treatment discussed above in connection with Fig. 5 (E). The diffusion of H⁺ in the +Z direction increases the depth of the domain inversion layers. If the domain inversion layers 15 are deep enough, a greater overlapping of the electric field distributions of the fundamental wave and harmonic waves can be obtained, so that the wavelength conversion efficiency can be improved. In conventional techniques, however, lambda = 3.8 microns, W = 1.9 microns, and the depth of the optical waveguide path 23 (Fig. 4) is approximately 2.0 microns.

In the case of an ordinary heat treatment, H⁺ diffusion also occurs in directions perpendicular to the +Z direction, *i. e*. in directions parallel to the -Z surface. Accordingly, if an attempt is made to obtain domain inversion regions 15 that have a sufficient depth for the waveguide path 23, the domain inversion regions 15 contact each other and become continuous (Fig. 6), so that there is an extreme deterioration in the wavelength conversion efficiency.

In the prior art domain inversion method, the domain inversion layers 15 must be made shallow relative to the depth of the optical waveguide path. Accordingly, a large overlapping of the electric field of the fundamental wave and harmonic waves cannot be obtained. As a result, the efficiency of conversion into the second harmonic wave is low.

In the method described in Japanese Patent Application Kokai No. 5-27288, Yamamoto *et al*, H⁺ diffusion is positively prevented by increasing the temperature elevation rate during the heat treatment used to form the domain inversion layers. However, this method is intended primarily to prevent the diffusion of H⁺ present in the ⁺H exchange layers, and does not positively increase the depth of the domain inversion layers. Accordingly, there is a limit to amount of domain inversion layer depth that can be obtained. Thus, even if this method is used, the efficiency of harmonic generation is inherently limited, so that the efficiency of conversion into the second harmonic wave remains low.

The invention provides a method for forming deep domain inversion layers. Additionally, the invention provides a method for fabricating wavelength conversion devices that have a much higher efficiency of harmonic wave generation than conventional wavelength conversion devices.

H⁺ exchange and heat treatment techniques are commonly used to fabricate the periodical domain inversion layer on a crystal substrate consisting of, for example LiTaO₃. In the heat treatment technique, lateral diffusion of H⁺ prevents the formation of deep periodical domain inversion layers. However, the invention provides a technique that uses the diffusion of H⁺ in the heat treatment process, based on the discovery by the inventors that the diffusion of H⁺ in the desired direction only can be assisted by applying an electric field to the crystal substrate during the heating of said substrate.

As in cases where wavelength conversion devices are fabricated by using H⁺ exchange and heat treatment to form stripe-form domain inversion layers in a crystal substrate consisting of LiTaO₃, the direction of the electric field that is to be applied to the crystal substrate is the opposite direction to the electric field that inverts the domain. Accordingly, it would appear to be undesirable from the view of domain inversion layer formation to apply such an electric field to the crystal substrate. However, the inventors have confirmed that it is possible to manufacture wavelength conversion devices with superior characteristics by setting the magnitude of the electric field applied from the outside at a value that is sufficiently smaller than the magnitude of the internal electric field generated by the diffusion of H⁺, but that promotes the diffusion of H⁺.

The herein disclosed methods for forming domain inversion layers and for fabricating wavelength conversion devices were devised on the basis of the abovementioned findings. Specifically, the method of forming domain inversion layers is characterized by the fact that:
(a) in the method, domain inversion layers are formed by exchanging specified ions in the surface portion of a ferroelectric crystal substrate for other ions, and then heating said crystal substrate; and
(b) during the heating of the crystal substrate, an electric field is applied to said crystal substrate from the outside in such a direction that the other ions receive a force toward the undersurface of said crystal substrate, thus promoting the diffusion of said other ions toward said undersurface.

Furthermore, fabrication of wavelength conversion devices in accordance with the invention herein is characterized by the fact that said method includes:
(a) a process in which stripe-form masks are formed on the surface of a ferroelectric crystal substrate;
(b) a process in which specified ions in the portions of the surface of the crystal substrate are exchanged with other ions through the opening of the masks;
(c) a process in which electrodes are formed on both sides of the crystal substrate. Ordinarily, these electrodes are plane electrodes. However, partial electrodes may also be used; and
(d) a process in which:
   (i) the crystal substrate is heated; and
   (ii) a voltage with a domain which is such that the other ions receive a force in the direction of the undersurface of the crystal substrate is applied across the electrodes, thus promoting the diffusion of the other ions toward the undersurface.

Alternatively, the method herein for fabricating wavelength conversion devices is characterized by the fact that said method includes:
(a) a process in which stripe-form patterned electrodes are formed on the surface of a ferroelectric crystal substrate. Ordinarily, these electrodes are metal patterned electrodes. However, pattern electrodes consisting of materials other than metals may also be used;
(b) a process in which specified ions in the portions of the surface of the crystal substrate are exchanged for other ions through the opening of the metal patterned electrodes;
(c) a process in which an electrode is formed on the undersurface of the crystal substrate. Ordinarily, this electrode is a plane electrode.However, a partial electrode may also be used; and
(d) a process in which:
   (i) the crystal substrate is heated; and
   (ii) a voltage with a domain which is such that the other ions receive a force in the direction of the undersurface of the crystal substrate is applied across the electrodes, thus promoting the diffusion of the other ions toward the undersurface.

Various materials may be used as the ferroelectric crystal substrate. The "specified ions" and "other ions" are determined by the type of ferroelectric crystal that makes up the substrate. For example, in cases where the ferroelectric crystal substrate consists of an LiTaO₃ or LiNbO₃ crystal substrate, the specified ions are Li⁺ ions, and the other ions are ordinarily H⁺ ions.

In cases where the ferroelectric crystal substrate consists of a crystal other than LiTaO₃ or LiNbO₃, the specified ions are the ions that can be exchanged by the other ions in the heat treatment process. Furthermore, the other ions are not limited to H⁺ ions.

In addition, the heating of the crystal substrate is performed in an appropriate melt, *e. g.* a benzoic acid melt. The electric field which is applied from the outside is applied to promote the diffusion of the other ions, *e*. *g*. H⁺ ions, in the direction perpendicular to the substrate. It is necessary that the magnitude of the electric field be sufficiently small compared to the magnitude of the internal electric field generated by the thermal diffusion of the other ions. On the other hand, the magnitude of the externally applied electric field must be sufficient to promote the diffusion of the other ions. Generally, it is desirable that the magnitude of the external electric field, *i. e*. the electric field applied to the crystal substrate from the outside, be approximately 1000 V/cm.

In the embodiment of the present invention that provides a method for fabricating wavelength conversion devices, the electric field is created by applying a voltage across the electrodes formed on the surface and undersurface of the crystal substrate. The external electric field created by the voltage application is applied in a direction perpendicular to the plane of the substrate. Accordingly, only the diffusion of the other ions in the -Z direction or +Z direction is promoted.

The voltage applied across the electrodes may be applied after the substrate temperature has reached the temperature at which the diffusion of the other ions begins. However, to promote diffusion in an efficient manner, it is desirable to apply the voltage before the substrate temperature reaches the temperature at which the diffusion of the "other ions begins (*e.g*. about 300°C).

Ordinarily, the magnitude of the internal electric field is greater than that of the external electric field. However, as the diffusion of the other ions proceeds, the magnitude of said internal electric field decreases. Thus, the heat treatment time is determined in accordance with the diffusion rate of the other ions. This heat treatment time varies according to such factors as, for example the type of crystal substrate used, the types of specified ions and other ions, and the heat treatment temperature. Ordinarily, however, the heat treatment time is approximately 1 minute. Furthermore, because it appears that the domain is inverted when the crystal substrate falls below the transition temperature of the H⁺ exchange region, the application of a voltage across the electrodes at this time acts to prevent domain inversion. Accordingly, it is desirable that the application of an electric field from the outside be halted prior to the cooling of the crystal substrate.

In the preferred embodiment of the invention that provides a method for forming domain inversion layers and for fabricating wavelength conversion devices, the diffusion of exchanged ions by heat treatment is positively used. Accordingly, an external electric field is used to assist the diffusion of the exchanged ions in the direction of said electric field. As a result, wavelength conversion devices having domain inversion layers which have a large depth and a limited spread in the lateral direction, *i. e.* in the direction parallel to the plane of the crystal substrate, can be obtained.
Figs. 1 (A) through 1 (F) are explanatory diagrams which illustrate a first embodiment of the invention.;
Fig. 2 (A) is a graph which shows the time - heating temperature relationship in first and second embodiments of the invention;
Fig. 2 (B) is a graph which shows the time - supply voltage relationship in the same embodiments of the invention;
Figs. 3 (A) through 3 (F) are explanatory diagrams which illustrate a second embodiment of the invention;
Fig. 4 shows a typical wavelength conversion device;
Fig. 5(A) through 5(E) illustrate the fabrication process of a conventional wavelength conversion device; and
FIG. 6 illustrates problems encountered in the prior art.

In the embodiments described below, LiTaO₃ was used as the crystal substrate. However, the invention is not limited to LiTaO₃. It would also be possible to use other crystal substrates consisting, for example of LiNbO₃. Thus, the following embodiments do not limit the invention.

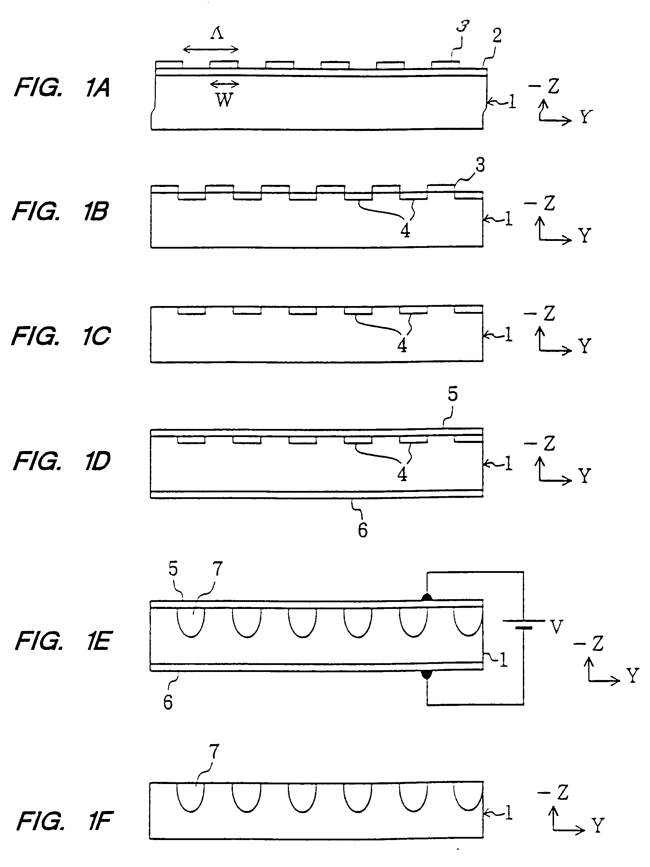

Figs. 1 (A) through 1 (F) are explanatory diagrams that illustrate a first embodiment of the invention that provides a method for fabricating wavelength conversion devices. The fabrication of said wavelength conversion devices is accomplished as described below.
(1) As is shown in Fig. 1(A), an SiO₂ film 2 having a thickness of approximately 0.2 microns is formed on the -Z surface of an LiTaO₃ crystal substrate. In the preferred embodiment, this substrate has a length of 8 mm, a width of 10 mm, and a thickness of 500 microns. After the SiO₂ film 2 is coated with a photoresist, stripe masks 3 having a period of lambda (*e.g*. 3.8 microns) and a width of W (*e.g*. 1.9 microns) are formed by photolithography.
(2) The resist pattern is transferred to the SiO₂ film 2 by etching with bufferred hydrofluoric acid, so that stripe-form exposed portions are formed on the surface of the crystal substrate 1.
(3) As is shown in Fig. 1(B), the substrate is heat-treated for 40 minutes in benzoic acid at 230°C, so that proton exchanged layers 4 are formed. Then, as is shown in Fig. 1(C), the SiO₂ stripe masks 3 are removed by means of bufferred hydrofluoric acid.
(4) As is shown in Fig. 1(D), Ta electrodes 5 and 6 are formed on the -Z surface and undersurface (+Z surface) of the crystal substrate by sputtering.
(5) A heat treatment is performed for 1 minute at 530°C using an infrared heating apparatus. During this time, as is shown in Fig. 1(E), a voltage of 50 V is applied across the Ta electrodes 5 and 6 on the surface (*i.e*. -Z surface) and undersurface (*i.e.* +Z surface) of the crystal substrate 1 so that an external electric field is created in a direction which causes H⁺ ions to diffuse into the interior of the substrate from the -Z surface. In this way, domain inversion layers 7 are formed.
(6) The application of the voltage is stopped prior to the cooling of the crystal substrate, *e. g*. immediately prior to said cooling. Afterward, the Ta electrodes 5 and 6 are removed by means of bufferred hydrofluoric acid.

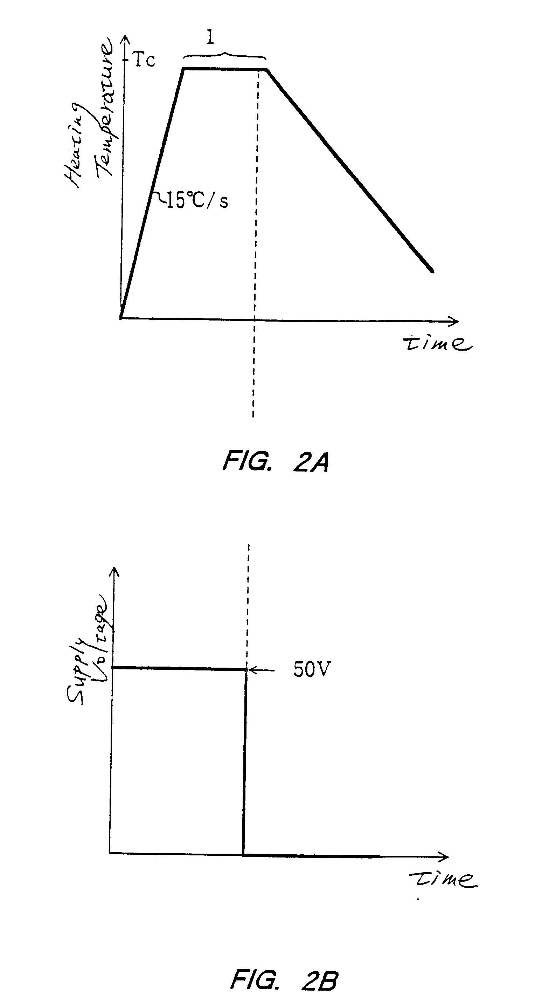

Figures 2(A) and 2(B) show the time - heating temperature and time - supply voltage relationships in the abovementioned processes 5 and 6. It is desirable that the temperature elevation rate be high. In the preferred embodiment, as is shown in Figure 2(A), the temperature elevation rate is set at approximately 10°C/s. The sustained heating temperature is set at a temperature slightly lower than the Curie temperature Tc (generally about 600°C).

If the time for which a high temperature is maintained is too short, an effect which causes the diffusion of H⁺ in the +Z direction cannot be obtained. Conversely, if said time is too long, excessive diffusion occurs, so that the internal electric field is diminished, thus making it impossible to obtain a domain inversion effect. Accordingly, in the preferred embodiment, the heating maintenance time is set at 1 minute. Furthermore, the cooling rate is set at an appropriate value. In the preferred embodiment, this rate is set at -3°C/s.

The voltage applied across the electrodes can also be caused to vary in an on-off manner, or to vary in magnitude over time. The magnitude of this voltage depends, for example on the thickness of the substrate and the type of crystal substrate used. Generally, said voltage can be set at a value of several volts to several tens of volts or greater. In the preferred embodiment, the voltage is set at 50 V and is varied in an on-off manner. Furthermore, it is desirable that this voltage be applied at least until the temperature at which the diffusion of H⁺ begins (approximately 300°C) is reached. In the preferred embodiment, the voltage is applied simultaneously with heating. Furthermore, said voltage is switched off before the cooling of the substrate begins.

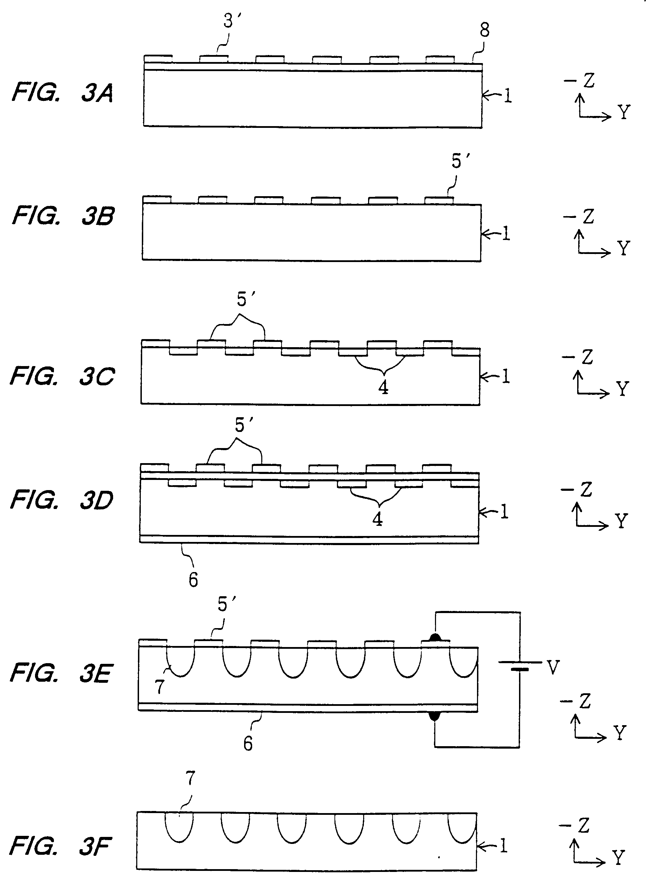

Figs. 3(A) through 3(F) are explanatory diagrams that illustrate a second embodiment of the invention which provides a method for fabricating wavelength conversion devices. The fabrication of said wavelength conversion devices is accomplished as described below.
(1) As is shown in Fig. 3(A), a Ta film 8 having a thickness of 0.2 microns is formed on the -Z surface of an LiTaO₃ crystal substrate 1. In the preferred embodiment, this substrate has a length of 8 mm, a width of 10 mm, and a thickness of 500 microns. After this Ta film 8 is coated with a photoresist 3', stripe-form Ta electrodes 5' having a period of lambda (*i.e*. 3.8 microns) and a width of W (*i.e.* 1.9 microns) are formed by photolithography, as shown in Fig. 3(B).
(2) The resist pattern is transferred to the Ta electrodes 5' by dry etching in a CF₄ atmosphere.
(3) As is shown in Fig. 3(C), proton exchange layers 4 are formed by performing a heat treatment for 40 minutes in benzoic acid melt at 230°C.
(4) As is shown in Fig. 3(D), a Ta electrode 6 is formed by sputtering on the undersurface (*i.e*. +Z surface) of the crystal substrate.
(5) As is shown in Fig. 3(E), a heat treatment is performed for 1 minute at 530°C using an infrared heating apparatus. During this time, a voltage is applied so that an external electric field is created in a direction that causes H⁺ ions to diffuse into the interior of the crystal substrate 1 from the -Z surface. In this way, domain inversion layers 7 are formed.
(6) The application of the voltage is stopped immediately prior to the cooling of the crystal substrate 1. Afterward, the Ta electrodes 5' and 6 are removed by means of bufferred hydrofluoric acid.

The time - heating temperature and time - supply voltage relationships in the abovementioned processes 5 and 6 are similar to those for the embodiment of the invention shown in Figs. 2(A) and 2(B)).

When the efficiency of second harmonic wave generation is measured for the wave conversion devices fabricated in the abovementioned embodiments of the invention, the values obtained are four times the conventional value or greater. Although in the embodiments described above, stripe-form wavelength conversion devices were fabricated., the invention is not limited to the fabrication of stripe-form wavelength conversion devices.

In the embodiments described above, the application of the voltage is stopped immediately prior to cooling. However, because it may be predicted that the internal electric field which inverts the domain has a much greater magnitude than the external electric field, said voltage application may be continued during cooling.

The invention thus provides a method for forming domain inversion layers and for fabricating wavelength conversion devices that uses an external electric field to promote the diffusion of the exchanged ions in the direction of the electric field. Furthermore, the diffusion of said ions in directions perpendicular to the direction of said electric field can be limited. Accordingly, it is possible to form domain inversion layers which have a large depth and a limited spread in the lateral direction, *i. e*. in the direction parallel to the plane of the crystal substrate. As a result, the present invention provides a method for fabricating wavelength conversion devices in which the efficiency of harmonic generation is much higher than in conventional wavelength conversion devices.

Although the invention is described herein with reference to the preferred embodiment, one skilled in the art will readily appreciate that other applications may be substituted for those set forth herein without departing from the scope of the present invention. Accordingly, the invention should only be limited by the Claims included below.

## Claims

1. A method of forming a domain inversion layer, comprising the steps of:
exchanging other ions for specified ions in a surface portion of a ferroelectric crystal substrate;
heating the substrate; and
causing said other ions to diffuse toward an undersurface of the substrate by applying an externally-generated electric field to the substrate, thereby exerting a force that urges the other ions toward the undersurface during the heating.

2. A method of fabricating a wavelength conversion device, comprising the steps of:
(a) forming a pattern (3; 3') on a surface of a ferroelectric crystal substrate (1);
(b) exchanging other ions for specified ions in a portion (4) of the surface of the substrate on which the pattern is not formed;
(c) forming an electrode (5; 5') on the surface of the substrate;
(d) forming an electrode (6) on an undersurface of the substrate;
(e) heating the substrate; and
(f) causing said other ions to diffuse toward the undersurface of the substrate by applying a voltage (V) across the electrodes, thereby generating an electric field that exerts a force urging the other ions toward the undersurface during the heating.

3. A method according to claim 2 wherein step (b) is performed after step (c) and wherein step (c) comprises forming the electrode (5') in a plurality of segments according to the pattern formed in step (a).

4. A method according to claim 2 or claim 3 and further comprising the steps of removing the voltage prior to any cooling of the substrate and then cooling the substrate.

5. A method according to any of claims 2 to 4, wherein the substrate comprises LiTaO₃ or LiNbO₃.

6. A method according to any of claims 2 to 5, wherein the surface of the substrate on which the pattern is formed in step (a) is a -Z surface.

7. A method according to any of claims 2 to 6, wherein the specified ions comprise Li⁺ ions and/or the other ions comprise H⁺ ions.

8. A method according to any of claims 2 to 7, wherein the electrode (5; 5') formed in step (c) comprises a + electrode and/or the electrode (6) formed in step (d) comprises a - electrode.

9. A method according to any of claims 2 to 8, wherein step (e) comprises heating the substrate in a benzoic acid melt.

10. A wavelength conversion device fabricated by a method according to any preceding claim.
